Europäisches Patentamt

European Patent Office

Office européen des brevets

(11) Veröffentlichungsnummer: **0 002 454**
**B1**

(12) **EUROPÄISCHE PATENTSCHRIFT**

(21) Anmeldenummer: **78101430.3**

(22) Anmeldetag: **22.11.78**

(51) Int. Cl.³: **C 03 B 33/12**

(54) Glasschneider.

(30) Priorität: **01.12.77 DE 2753527**

(43) Veröffentlichungstag der Anmeldung:
**27.06.79 Patentblatt 79/13**

(45) Bekanntmachung des Hinweises auf die Patenterteilung:
**28.01.81 Patentblatt 81/4**

(84) Benannte Vertragsstaaten:
**BE CH FR GB LU NL SE**

(56) Entgegenhaltungen:
**DE - B - 1 063 769**
**FR - A - 339 201**

(73) Patentinhaber: **Firma Josef Bohle**
**Grenzstrasse 9-13**
**D-5650 Solingen 11 (DE)**

(72) Erfinder: **Bohle, Ulrich, Dipl.-Ing.**
**Buchweizenberg 19**
**D-5650 Solingen (DE)**

(74) Vertreter: **Tackenberg, Karl, Dipl.-Ing.**
**Birkenweiher 15**
**D-5650 Solingen (DE)**

## Glasschneider

Die Erfindung betrifft einen glasschneider mit einer Vielzahl von Schneidrädchen, die zwischen einer Tragplatte und einer mit dieser fest verbundenen kreisrunden Deckplatte längs eines Kreises in gleichen Umfangsabständen verteilt und zusätzlich drehbar gelagert sind und von denen jeweils ein Schneidrädchen in Schneidbereitschaft steht, wobei das von der Tragplatte und der Deckplatte gebildete Gehäuse der Schneidrädchen in einer länglichen Ausnehmung am Kopf des Glasschneiders auswechselbar gehalten ist und die Tragplatte am Umfang mehrere sich paarweise parallel gegenüberliegende seitliche Anflächungen aufweist, von denen die Anflächungen jedes Paares symmetrisch zum Mittelpunkt des Schneidrädchenkreises liegen und längs desselben in Winkelabständen verteilt sind, die denen der Schneidrädchen entsprechen.

Bei einem bekannten Glasschneider (deutsches Patent 1 063 769), bei dem das Gehäuse der Schneidrädchen in der Ausnehmung am Kopf des Glasschneiders drehbar geführt ist, erfolgt die Halterung des Gehäuses in der Ausnehmung mittels einer mit dem Kopf des Glasschneiders verschraubbaren Spannplatte, die an ihren beiden Längskanten Abwinklungen aufweist, mit denen sie jeweils an zwei miteinander in Parallelität stehenden Anflächungen der ihr zugekehrten Platte des Gehäuses anliegt. Durch Anliegen der Spannplatte an Kantenanflächungen der ihr zugekehrten Platte des Gehäuses wird richtiger und unverrückbarer Sitz des jeweils in der Arbeitslage gerückten Schneidrädchens gewährleistet. Derartige Glasschneider weisen jedoch wesentliche Nachteile auf. So ist das Einrücken eines Schneidrädchens in die Arbeitslage insofern umständlich und zeitraubend, als zum einen Male hierzu das Gehäuse der Schneidrädchen und die Spannplatte zueinander ausgerichtet werden müssen, was durch die Beweglichkeit der beiden Teile erschwert ist. Es muß zum anderen Male die Spannplatte vor jedesmaligem Einrücken eines neuen Schneidrädchens in die Arbeitslage zuvor gelöst und anschließend mit dem Kopf des Glasschneiders wieder verschraubt werden. Die Anordnung der Spannplatte führt ferner zur Erhöhung der Gestehungskosten derartiger Glasschneider. Schließlich haftet derartigen Glasschneidern der Nachteil an, daß die Vorratsschneidrädchen bei einem in Benutzung genommenen Glasschneider Verschmutzen durch Reste von Kitt o.dgl. ausgesetzt sind, was möglicherweise Festsetzen der Schneidrädchen auf ihrer Achse zur Folge hat.

Es ist auch bereits ein Glasschneider mit zwei sich gegenüberliegenden Schneidrädchen bekannt (deutsches Patent 1 237 274), bei dem die Schneidrädchen in einem einstückig aus flexiblem Werkstoff bestehenden Gehäuse gelagert sind, das zwei Führungen aufweist, mit denen das Gehäuse auf den gegabelten Kopf des Glasschneiders aufschiebbar ist. Nach Abnutzen des in der Arbeitslage befindlichen Schneidrädchens wird das Gehäuse auf dem Kopf des Glasschneiders umgesteckt, wonach das zweite Schneidrädchen in Schneidbereitschaft steht. Da das Gehäuse infolge seiner Herstellung aus flexiblem Werkstoff Klemmsitz auf den Gabelenden des Kopfes des Glasschneiders einnimmt, bedarf es zur Halterung des Gehäuses auf dem Kopf keiner zusätzlichen Klemm- oder Schrauborgane. Derartige Glasschneider können jedoch nur mit zwei Schneidrädchen ausgerüstet werden, was sich in der Praxis als nachteilig erwiesen hat, wie auch bei ihnen das Vorratsschneidrädchen nur wenig abgedeckt und daher Verschmutzungen ausgesetzt ist. Es ist ferner eine einwandfreie Lagerung der Achsen der Schneidrädchen in dem Gehäuse letzterer infolge der Herstellung des Gehäuses aus flexiblem Werkstoff nicht möglich, weil sich die Achse des in der Arbeitslage befindlichen Schneidrädchens bei Ausführen eines Schnittes durch den dabei auftretenden Arbeitsdruck in den Werkstoff eindrückt. Die Folge hiervon ist Versetzen des Schneidrädchens aus der Arbeitslage, so daß mit dem Schneidrädchen kein einwandfreier Schnitt mehr vollführt werden kann. Um diesem Übelstand zu begegnen, ist man bei derartigen Glasschneidern dazu übergegangen, die Achsen der Schneidrädchen in Löchern einer metallenen Platte zu lagern, um auf diese Weise Versetzen der Achsen zu verhüten. Die versetzungsfreie Lagerung der Achsen führt jedoch zu einer nicht unwesentlichen Verteuerung derartiger Glasschneider.

Der Erfindung, wie sie in den Ansprüchen gekennzeichnet ist, liegt die Aufgabe zugrunde, bei einem Glasschneider der eingangs beschriebenen Gattung das Einrücken des Schneidrädchens in die Arbeitslage sowie die Halterung des Gehäuses der Schneidrädchen am Kopf der Handhabe des Glasschneiders zu vereinfachen und ferner die Vorratsschneidrädchen vor Verschmutzen zu bewahren.

Diese Aufgabe wird durch die im A1 beanspruchten Merkmale gelöst.

Die durch die Erfindung erreichten Vorteile sind in folgendem zu sehen. Um nach Abnutzen des in der Arbeitslage befindlichen Schneidrädchens ein Vorratsschneidrädchen in Schneidbereitschaft zu rücken, braucht lediglich die Rändelmutter geringfügig gelöst zu werden, wonach das Gehäuse aus der Ausnehmung am Kopf der Handhabe des Glasschneiders herausgenommen werden kann und so weit gedreht wird, bis ein Vorratsschneidrädchen in Schneidbereitschaft steht. Nachdem das Gehäuse wieder in die Ausnehmung eingeschoben und die Rändelmutter erneut angezogen worden ist, ist das Gehäuse in der Ausnehmung vor Drehen und Verschieben und damit das in die Arbeitslage gerückte Schneidrädchen in seiner Lage gesichert. Es sind ferner die Vorratsschneidrädchen weitgehend abgedeckt und auf diese Weise vor Verschmutzen gesichert.

Im folgenden wird die Erfindung anhand eines in einer Zeichnung dargestellten Ausführungsbeispieles noch näher erläutert. In der Zeichnung zeigen:

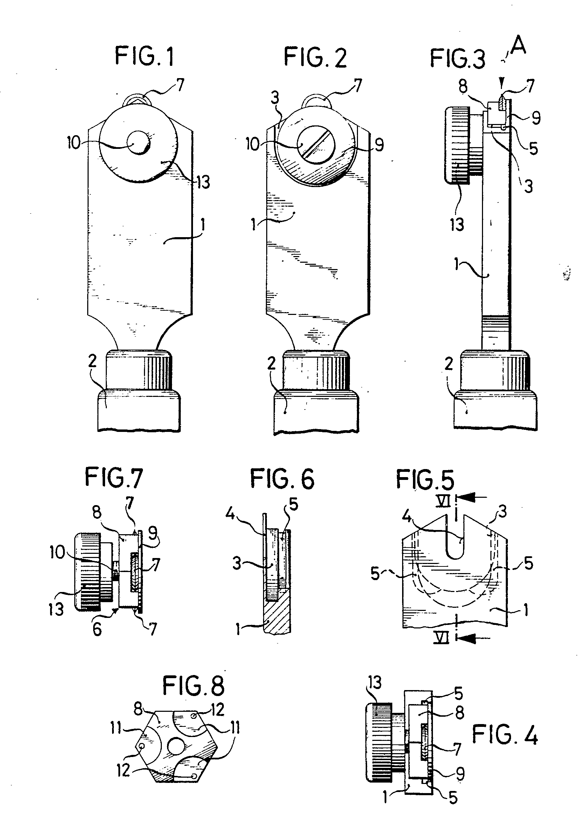

Figur 1 den teilweise gezeichneten Glasschneider in Draufsicht auf die ein Breitseite,

Figur 2 in Draufsicht auf die andere Breitseite,

Figur 3 in Seitenansicht,

Figur 4 in Draufsicht in Pfeilrichtung A nach Figur 3,

Figur 5 den teilweise gezeichneten Kopf des Glasschneiders ohne Schneidrädchen in Draufsicht auf eine Breitseite,

Figur 6 einen Schnitt nach der Linie VI—VI der Figur 5,

Figur 7 das Gehäuse der Schneidrädchen mit der Rändelmutter in Ansicht, und

Figur 8 die Tragplatte der Schneidrädchen in Draufsicht auf eine Breitseite.

Mit 1 ist der Kopf und mit 2 die sich an diesen anschließende Handhabe des Glasschneiders bezeichnet. Der Kopf 1 weist eine längliche, mit dem vorderen Ende des Kopfes 1 abschließende Ausnehmung 3 auf, die am hinteren Ende im Bogen verläuft, sowie im Bereich der Ausnehmung 3 einen Kantenausschnitt 4. Bei beiden seitlichen Begrenzungen der Ausnehmung 3 weisen zwei sich gegenüberliegende, mit den längsseitigen Begrenzungen der Ausnehmung 3 in Parallelität stehende Nuten 5 auf, die an ihren unteren Enden im Bogen auslaufen. Anstelle der beiden Nuten kann im Bedarfsfall auch eine einzige Nut vorgesehen werden, die für diesen Fall genau dem Randverlauf der Ausnehmung 3 gestaltet ist, Mit 6 ist das Gehäuse für drei Schneidrädchen 7 bezeichnet, das von einer Tragplatte 8 und einer Deckplatte 9 gebildet ist. Tragplatte 8 und Deckplatte 9 sind mittels einer Schraube 10 fest miteinander verbunden und um den glatten Schaft der Schraube 10 drehbar. Die Tragplatte 8 weist an ihrer der Deckplatte 9 zugekehrten Breitseite drei Ausnehmungen 11 auf, in denen die Schneidrädchen 7 auf Achsen 12 drehbar gelagert sind. Die Schneidrädchen 7 sind dabei zum größeren Teil von der Deckplatte 9 abgedeckt. Die Tragplatte 8 ist mit zwei sich gegenüberliegenden Anflächungen in der Ausnehmung 3 des Kopfes 1 des Glasschneiders drehfest geführt. Es steht dabei ein Schneidrädchen 7 in Schneidbereitschaft, während die Vorrätigen Schneidrädchen 7 mit ihrem gegenüber dem Gehäuse 6 vorstehenden Teil in den Nuten 5 vor Verschmutzen gesichert liegen. Die Deckplatte 9 schließt breitseitig mit dem Kopf 1 des Glasschneiders bündig ab. Die Schraube 10 des Gehäuses 6 der Schneidrädchen 7 durchsetzt mit ihrem Gewindeende den Kantenausschnitt 4 des Kopfes 1 und ist mit einer Rändelmutter 13 versehen. Nach Anziehen der Rändelmutter 13 gegen den Kopf 1 ist das Gehäuse der Schneidrädchen 7 vor unbeabsichtigtem Verschieben gesichert.

**Patentansprüche**

1. Glasschneider mit einer Vielzahl von Schneidrädchen (7), die zwischen einer Tragplatte (8) und einer mit dieser fest verbundenen kreisrunden Deckplatte (9) längs eines Kreises in gleichen Umfangsabständen verteilt und zusätzlich drehbar gelagert sind und von denen jeweils ein Schneidrädchen (7) in Schneidbereitschaft steht, wobei das von der Tragplatte (8) und der Deckplatte (9) gebildete Gehäuse (6) der Schneidrädchen (7) in einer länglichen Ausnehmung (3) am Kopf (1) des Glasschneiders auswechselbar gehalten ist und die Tragplatte (8) am Umfang mehrere sich paarweise parallel gegenüberliegende seitliche Anflächungen aufweist, von denen die Anflächungen jedes Paares symmetrisch zum Mittelpunkt des Schneidrädchenkreises liegen und längs desselben in Winkelabständen verteilt sind, die denen der Schneidrädchen entsprechen, dadurch gekennzeichnet, daß die Tragplatte (8) der Schneidrädchen (7) und die am Ende im Bogen verlaufende Ausnehmung (3) am Kopf (1) des Glasschneiders so bemessen sind, daß die Tragplatte bei in die Ausnehmung. mit einer beliebig ausgewählten Winkelstellung eingesetztem Gehäuse (6) mit zwei miteinander in Parallelität stehenden Anflächungen direkt an zwei seitlichen Begrenzungen der Ausnehmung (3) anliegt.

daß in den beiden seitlichen Begrenzungen der Ausnehmung (3) zwei sich gegenüberliegende, in Parallelität stehende Nuten (5) zur Aufnahme der gegenüber dem Gehäuse (6) der Schneidrädchen (7) vorstehenden Teile der vorrätigen Schneidrädchen (7) vorgesehen sind,

daß die Deckplatte (9) bei in die Ausnehmung (3) eingesetztem Gehäuse (6) zwischen den außen an die Nuten (5) anschließenden, sich gegenüberliegenden Randbereichen der seitlichen Begrenzungen der Ausnehmung (3) aufgenommen ist, und daß

das Gehäuse (6) der Schneidrädchen (7) mit einer Schraube (10) einen Kantenausschnitt (4) des Kopfes (1) des glasschneiders durchsetzt, wobei auf der Schraube (10) eine gegen den Kopf (1) der Handhabe (2) anziehbare Rändelmutter (13) geführt ist.

2. Glasschneider nach Patentanspruch 1, dadurch gekennzeichnet, daß die Tragplatte (8) der Schneidrädchen (7) and der der Deckplatte (9) zugekehrten Breitseit eine der Anzahl der Schneidrädchen (7) entsprechende Anzahl Ausnehmungen (11) aufweist, in denen die Schneidrädchen (7) auf ihren Achsen (12) gelagert sind und aus denen sie nur mit einem Teil ihrer Schneide herausragen.

## Claims

1. A glass cutter having a plurality of cutting wheels (7) distributed along a circle at the same peripheral distance from one another and additionally mounted rotatably between a supporting plate (8) and a circular cover plate (9) fixedly connected thereto, one of said cutting wheels being ready to cut, the housing (6) of the cutting wheels (7) defined by the supporting plate (8) and the cover plate (9) being held exchangeable in an elongated recess (3) at the head (1) of the glass cutter and the supporting plate (8) at its circumference comprising several lateral flats arranged in pairs parallel opposite to each other, the flats of each pair being symmetrical to the centre of the cutting wheel circle and being distributed over said circle at angular distances corresponding to those of the cutting wheels, characterised in

that the supporting plate (8) of the cutting wheels (7) and the recess (3) which is provided at the head (1) of the glass cutter and has a curved end are dimensioned such that the supporting plate, when the housing (6) is inserted in the recess with an arbitrarily chosen angular position, directly engages with two flats arranged parallel to one another two lateral boundaries of the recess (3),

that in the two lateral boundaries of the recess (3) there are provided two opposing, parallel arranged grooves (5) for receiving the portions of the cutting wheels (7) in stock which extend beyond the housing (6) of the cutting wheels (7),

that the cover plate (9), when the housing (6) is inserted in the recess (3), is received between the opposing edge regions of the lateral boundaries of the recess (3) which join up the grooves (5) at the outside, and

that the housing (6) of the cutting wheels (7) passes with a screw (10) an edge cutout (4) of the head (1) of the glass cutter, a knurled nut (13) which is tightenable against the head (1) of the handle (2) being guided on said screw (10).

2. A glass cutter according to patent claim 1, characterised in that the supporting plate (8) of the cutting wheels (7) has at the broadside facing the cover plate (9) a number of recesses (11) corresponding to the number of cutting wheels (7), in which recesses (11) the cutting wheels (7) are mounted on their axes (12) and from which they project only with a part of their cutting edge.

## Revendications

1. Coupe-verre ayant plusieurs molettes de découpage (7) qui sont réparties, entre une plaque support (8) et une plaque de recouvrement (9) circulaire fermement assemblée avec la première, à équidistances périphériques le long d'un cercle, tout en étant logées de façon à pouvoir tourner et dont respectivement une molette de découpage (7) se trouve en position de coupe, la cage à molettes (6) formée par la plaque support (8) et la plaque de recouvrement (9) étant maintenue dans un évidement oblong (3) à la tête (1) du coupe-verre, de façon à pouvoir être remplacée, et la plaque support (8) présentant, sur sa circonférence, opposés parallèlement par paires, plusieurs méplats latéraux dont les méplats de chaque paire sont disposés symétriquement par rapport au centre du cercle de molettes de découpage et répartis le long de celui-ci à distances angulaires correspondant à celles des molettes de découpage, caractérisé par ce

que la plaque support (8) des molettes de découpage (7) et l'évidement (3) se trouvant à la tête (1) du coupeverre et suivant une courbe à son extrémité arrière sont dimensionnés de telle manière que la plaque support s'appuie, quand la cage (6) est engagée avec une position angulaire choisie à volonté, avec deux méplats se trouvant en parallélisme l'un avec l'autre, directement sur deux limites latérales de l'évidement (3), que dans les deux limites latérales de l'évidement (3), il y a deux rainures (5) opposées se trouvant en parallélisme et servant à recevoir les parties des molettes de découpage (7) de réserve qui désaffleurent par rapport à la cage (6) des moulettes de découpage (7),

que la plaque de recouvrement (9) est reçue, quand la cage (6) est engagée dans l'évidement (3), entre les zones marginales opposées des limites latérales de l'évidement (3), lesquelles zones font extérieurement suite aux rainures (5), et que

la cage (6) des molettes de découpage (7) traverse, avec une vis (10), une découpure de bord (4) de la tête (1) du coupe-verre, ladite vis (10) étant munie d'un écrou moleté (13) pouvant être serré vers la tête (1) du manche (2).

2. Coupe-verre suivant revendication de brevet 1, caractérisé par ce que la plaque support (8) des molettes de découpage (7) présente, sur son côté large faisant face à la plaque de recouvrement (9), un nombre d'évidements (11) correspondant au nombre des molettes de découpage (7), évidements dans lesquels les molettes de découpage (7) sont logées sur leurs axes (12) et dont elles n'émergent qu'avec une partie de leur tranchant.

FIG.1  FIG.2  FIG.3

FIG.7  FIG.6  FIG.5

FIG.8  FIG.4